# EUROPÄISCHE PATENTANMELDUNG

(11) **EP 2 724 748 A1**
(43) Veröffentlichungstag der Anmeldung: **30.04.2014**
(21) Anmeldenummer: 12189749.0
(22) Anmeldetag: 24.10.2012
(51) Int. Cl.: A61N 7/02, G10K 11/32, B06B 1/06, H04R 17/00, G01N 29/24

(54) **Ultraschallschwinger mit unterschiedlichen Krümmungsradien**

(71) Anmelder: Siemens Aktiengesellschaft, 80333 München (DE)
(72) Erfinder: Clossen-von Lanken Schulz, Michael, 47661 Issum (DE); Obermayr, Stefan, 45475 Mülheim (DE)

(57) **Zusammenfassung**

Durch einen Schwinger, der verschiedene Krümmungsradien aufweist, ist eine bessere Fokussierung bei der Ultraschallprüfung notwendig, so dass bessere Prüfergebnisse erzielt werden.

## Beschreibung

Die Erfindung betrifft einen Schwinger, der bei der Ultraschallprüfung verwendet wird und verschiedene Krümmungsradien aufweist.

Bei der Einschallung in zylindrische Bauteile wie z. B. bei der Gewindeprüfung einer Schraube im eingebauten Zustand kommt es bei der Verwendung von ebenen Standardschwingern zu einer Defokussierung des Schallfeldes durch Brechung am Übergang zum Bauteil mit dem Außenzylinder bzw. zur Überfokussierung bei der Prüfung aus einer Bohrung heraus. Speziell bei der Winkelprüfung kommt es zudem zu einem ungleich verteilten Schallfeld, da der hintere Teil des Schwingers einen kürzen Weg im Vorlaufkeil zurücklegt als der vordere. Im Resultat führen diese beiden Effekte zu einer stark verminderten Prüfempfindlichkeit sowie zu einer nicht klar berechenbaren Form des Schallfeldes.

Es gibt den Ansatz durch Anpassung der Schwingerform dem defokussierenden Effekt entgegenzuwirken. Dabei wird der Schwinger selbst in Zylinderform geschliffen. Die Zylinderform wird dabei so ausgelegt, dass sie möglichst genau der ungewollten Brechung an der Bauteiloberfläche entgegenwirkt. Dem Effekt der Defokussierung kann damit relativ gut entgegengewirkt werden. Jedoch verstärkt sich bei dieser Vorgehensweise deutlich der Effekt des ungleich verteilten Schallfeldes durch die verschieden langen, im Keil zurückgelegten Strecken von Vorder- und Hinterteil des Schwingers, da die Divergenz des Schalls aus dem gekrümmten Schwinger höher ist, als die aus einem flachen Schwinger. Als Resultat bildet sich am Prüfpunkt eine sich axial überschneidende Fehlfokussierung, die nur im Mittel tatsächlich auf den gewollten Punkt fokussiert. Durch diesen Effekt ist auch hier die Prüfempfindlichkeit noch eingeschränkt.

Es ist daher Aufgabe der Erfindung, einen verbesserten Schwingerkopf für die Ultraschallprüfung aufzuzeigen, der die oben genannten Probleme überwindet.

Die Aufgabe wird gelöst durch einen Schwingerkopf gemäß Anspruch 1.

In den Unteransprüchen sind weitere vorteilhafte Maßnahmen aufgelistet, die beliebig miteinander kombiniert werden können, um weiter Vorteile zu erzielen.

Bislang werden Schwinger nur in flacher, konischer oder zylindrischer Form hergestellt. Im Prinzip lassen sich damit alle Prüfaufgaben durchführen. Um jedoch eine optimale Prüfempfindlichkeit des Systems zu erreichen, d.h. Auffinden kleinerer Fehler, bessere Bilddarstellung, größeres Signal, Rauschabstand wird vorgeschlagen, die Schwinger angepasst auf die jeweilige Prüfaufgabe - derart zu fertigen, dass sie den im Vorlaufkeil zurückgelegten Schallweg und der daraus resultierenden Verschiebung der Fokustiefen stufenlos kompensieren.

Es zeigt:

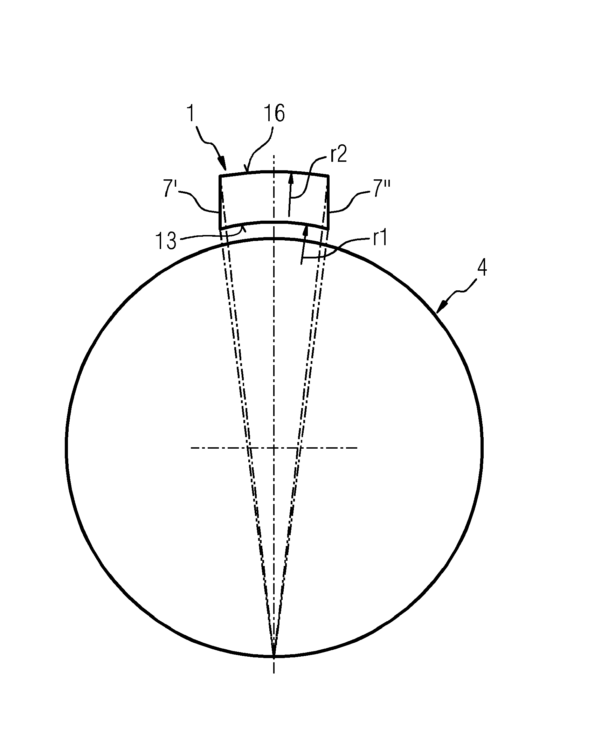

- Figur 1: einen erfindungsgemäßen Schwingerkopf.

Die Beschreibung und die Figur stellen nur Ausführungsbeispiele der Erfindung dar.

In Figur 1 ist ein zu untersuchendes Bauteil 4, hier im Querschnitt in Form eines Kreises oder mit gekrümmter Oberfläche, gezeigt und ein Schwinger 1 für die Ultraschalluntersuchung des Bauteils 4.
Der Schwinger 1 weist an der dem Bauteil 4 gegenüberliegenden Innenseite 13 einen ersten Krümmungsradius r1 auf, wohingegen der äußere Krümmungsradius r2 von dem des innenliegenden Radius um mindestens 10% verschieden ist, insbesondere größer ausgebildet ist.
Die Seitenflächen 7', 7" des Schwingers verlaufen vorzugsweise parallel zueinander.

Im Prinzip liegt eine doppelt konische Form vor.

Ebenso sind gestrichelt angedeutet die Ausrichtung der Ultraschallwellen im zu untersuchenden Bauteil, die zeigen, dass hier vorteilhafterweise eine sehr gute Fokussierung möglich ist und bessere Prüfergebnisse erzielt werden.

## Patentansprüche

1. Schwinger (1) für Ultraschallprüfung,
der (1) eine innenliegende Oberfläche (13) aufweist,
die dem zu untersuchenden Bauteil (4) direkt gegenüber liegt oder anliegt und
die (13) einen ersten Krümmungsradius (r1) aufweist und eine zweite gekrümmte äußere Oberfläche (16) des Schwingers (1),
die der innenliegenden Oberfläche (13) gegenüberliegt und die einen von dem ersten Krümmungsradius (r1) um mindestens 10% verschiedenen zweiten Krümmungsradius (r2) aufweist.

2. Schwinger nach Anspruch 1,
bei dem der zweite Krümmungsradius (r2) größer ist als der erste Krümmungsradius (r1).

3. Schwinger nach einem oder beiden der Ansprüche 1 oder 2,
bei dem die Seitenflächen (7, 7') des Schwingers (1) parallel zueinander verlaufen.
